# EUROPÄISCHE PATENTANMELDUNG

(11) **EP 0 726 350 A1**
(43) Veröffentlichungstag der Anmeldung: **14.08.1996**
(21) Anmeldenummer: 96810075.0
(22) Anmeldetag: 06.02.1996
(51) Int. Cl.: D06F 39/00, C02F 1/48

(54) **Vorrichtung zum Reinigen von Gegenständen**

(30) Priorität: 09.02.1995 CH 382/95
(71) Anmelder: SET High-Tech AG, 9427 Wolfhalden (CH)
(72) Erfinder: Baumgartner, Jessica, 9001 St. Gallen (CH)
(74) Vertreter: Schick, Carl

(57) **Zusammenfassung**

Das Gehäuse der Vorrichtung besteht aus zwei plattenförmig ausgebildeten verschweissten Kunststoffplatten (1). Im Gehäuse sind zwei flache, axial magnetisierte Magnetstangen untergebracht, die aus zwei bis fünf in Reihe geschalteten Permanentmagneten bestehen, die aus Verbindungen mit Seltenen Erden hergestellt sind. Die Vorrichtung umfasst eine korbartige wabenförmige Schutzhülle mit einem plattenförmigen Innenraum, in dem das flache Gehäuse (1) passend untergebracht ist. Die erfindungsgemässe Vorrichtung beeinflusst in entscheidender Weise die Wirkung der zusätzlichen Waschmittelkomponenten des Waschpulvers, das dadurch nur in erheblich kleineren Mengen verwendet werden muss, was grosse ökologische Vorteile mit sich bringt.

## Beschreibung

Die vorliegende Erfindung betrifft eine Vorrichtung zum Reinigen von Gegenständen.

Zum Reinigen von Gegenständen werden oft Ultraschall-Vorrichtungen eingesetzt, die eine Ultraschallwelle erzeugen, derart, dass durch ein Aufeinanderfolgen von Druckanstieg und Druckabfall in einem Frequenzbereich über 20 kHz kleine Dampfblasen entstehen, wenn der momentane örtliche Druck den Wasserdampfdruck unterschreitet, und wobei die Dampfblasen anschliessend durch den Druckanstieg wieder implodieren. Durch dieses Phänomen, das auch akustische Kavitation genannt wird, ergibt sich eine reinigende Wirkung.

Die Ultraschall-Vorrichtungen arbeiten zwar an sich sehr gut, erweisen sich jedoch als nachteilig im Hinblick darauf, dass sie ziemlich aufwendig sind. Neben den hohen Kosten, weisen sie auch ein zu kleines Nutzvolumen für die Aufnahme der zu reinigenden Wäsche oder Gegenstände auf.

Es ist daher Aufgabe der vorliegenden Erfindung, eine Vorrichtung zum Reinigen von Gegenständen zu schaffen, die weniger aufwendig ist.

Diese Aufgabe wird erfindungsgemäss durch eine Vorrichtung nach Patentanspruch 1 gelöst.

Vorteilhafte Ausführungen der Erfindung sind in den abhängigen Ansprüchen angegeben.

Nachfolgend wird die Erfindung beispielsweise anhand einer Zeichnung näher erläutert. Es zeigen:
- Figur 1: eine Draufsicht auf eine Kunststoffplatte mit Vertiefungen, in denen verschiedene Bausteine untergebracht werden,
- Figur 2: eine Ansicht nach Linie I-I in Figur 1,
- Figur 3: eine Seitenansicht dieser Platte,
- Figur 4: ein schematisches Blockschaltbild für den elektronischen Teil dieser Vorrichtung, und
- Figur 5 bis 7: eine Darstellung einer korbartigen Schutzhülle für die Kunststoffplatte.

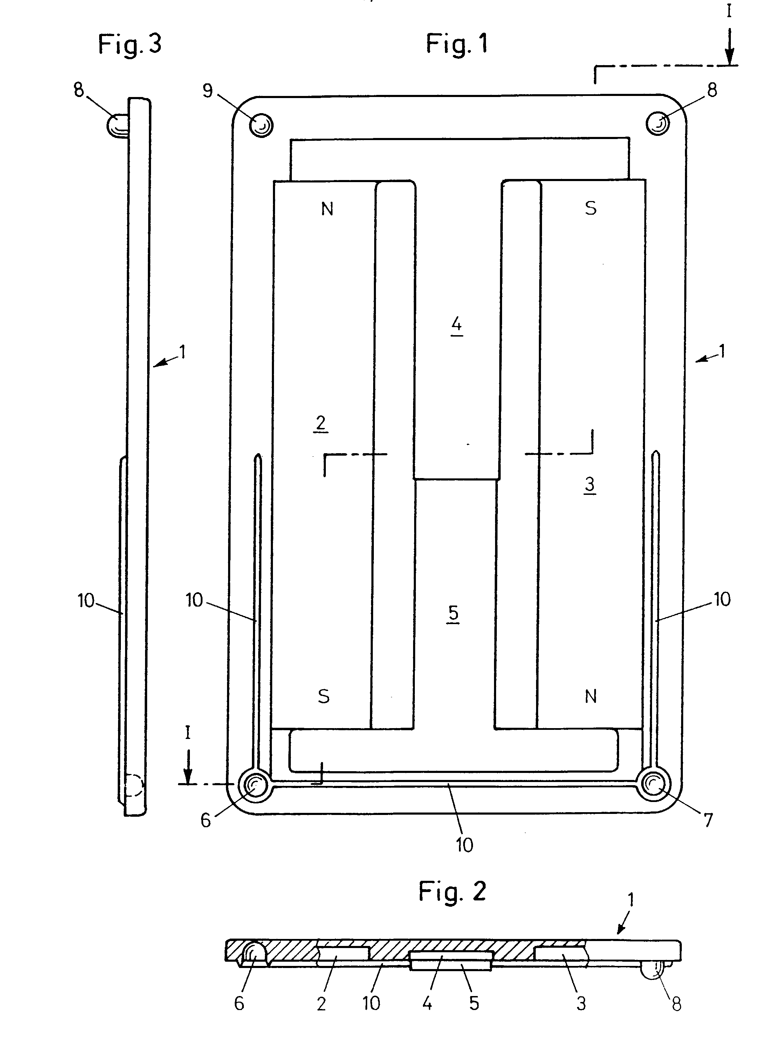

Die Kunststoffplatte 1 nach Figur 1 ist relativ flach und umfasst zwei Vertiefungen 2, 3 für je eine flache, axial magnetisierte Magnetstange, die auch aus zwei oder mehreren flachen, axial magnetisierten in Reihe geschalteten Permanentmagneten bestehen kann, die vorzugsweise aus einem Magnetwerkstoff mit hoher Koerzitivfeldstärke, insbesondere aus Verbindungen mit Seltenen Erden hergestellt sind. Die zwei Magnetstangen sind, wie in Figur 1 angedeutet, umgekehrt magnetisiert, um einen relativ geschlossenen Magnetkreis zu bilden, obwohl die eine Magnetstange am linken Rand und die andere am rechten Rand der länglichen Kunststoffplatte untergebracht ist (Fig. 1), derart, dass sich die zwei Magnetstangen in einem relativ grossen Abstand befinden. Die Kunststoffplatte kann eine etwa T-förmig ausgestaltete Vertiefung 4 und eine etwa T-förmige Erhöhung 5 aufweisen.

An zwei Ecken der Platte 1 ist je eine kleine runde Aussparung 6, 7 und an zwei anderen Ecken je eine Noppe 8, 9 vorhanden. Die Platte 1 kann mit dünnen Schweissraupen 10 versehen sein.

Die Vorrichtung nach der Erfindung umfasst zwei Kunststoffplatten nach Figur 1, die zusammengepresst und verschweisst werden, indem die Noppen 8, 9 der einen Platte in die Aussparungen 6, 7 der anderen Platte eingerastet werden. Nach dem Verschweissen der mit den zwei Dauermagnetstangen in den Vertiefungen 2 und 3 versehenen Platten entsteht eine äusserst handliche hermetisch verschlossene flache Vorrichtung in Kreditkartenformat, die ohne weiteres in eine Waschmaschine jeder Art hineingeworfen werden kann, um den Wirkungsgrad des Waschpulvers beim Reinigen von Wäsche, Kleidungsstücken usw. zu erhöhen.

Die Vorrichtung nach der Erfindung mit den zwei eingebauten Dauermagnetstangen funktioniert folgendermassen:

Da die Vorrichtung plattenförmig in Kreditkartenformat ausgebildet und auch relativ leicht ist, bewegt sie sich ständig im Wasser, so dass durch die Bewegung der Dauermagnete Wirbelströme im ionisierten Wasser induziert werden, die eine sehr leichte Zersetzung der gelösten Salze und teilweise, in sehr geringen Mengen, auch des Wassers bewirkt. Dies reduziert die Härtebilder, wie Kalzium und Magnesium.

Versuche haben gezeigt, dass das Wasser durch die erfindungsgemässe Vorrichtung "weicher" wird wegen der Verringerung bzw. des Abbaus von Kalzium- und Magnesium-Ionen.

Dies bringt den grossen Vorteil mit sich, dass in einer Waschmaschine, in die eine Vorrichtung nach der Erfindung eingeworfen wurde, Wäsche oder andere verschmutzte Gegenstände mit sehr wenig Waschpulver gereinigt werden können.

Bei den herkömmlichen Waschmitteln übernehmen die sogenannten Builder oder Gerüststoffe, die in den Waschmitteln enthalten sind, die Aufgabe des "Enthärtens". Diese Builder bauen die Härtebilder wie Kalzium und Magnesium ab, bzw. reduzieren diese. Zur Eliminierung der Wirkung der Kalzium- und Magnesium-Ionen werden beispielsweise auch Weichmacher, Bleichmittel und Tenside verwendet, die zwar eine Dispergierung von Schmutz bewirken, sich jedoch in der Folge recht ungünstig auf die Ökologie auswirken.

Die erfindungsgemässe Vorrichtung beeinflusst in entscheidender Weise die Wirkung der anderen Waschmittelkomponenten, die dadurch nur in erheblich kleineren Mengen verwendet werden müssen, was grosse ökologische Vorteile mit sich bringt.

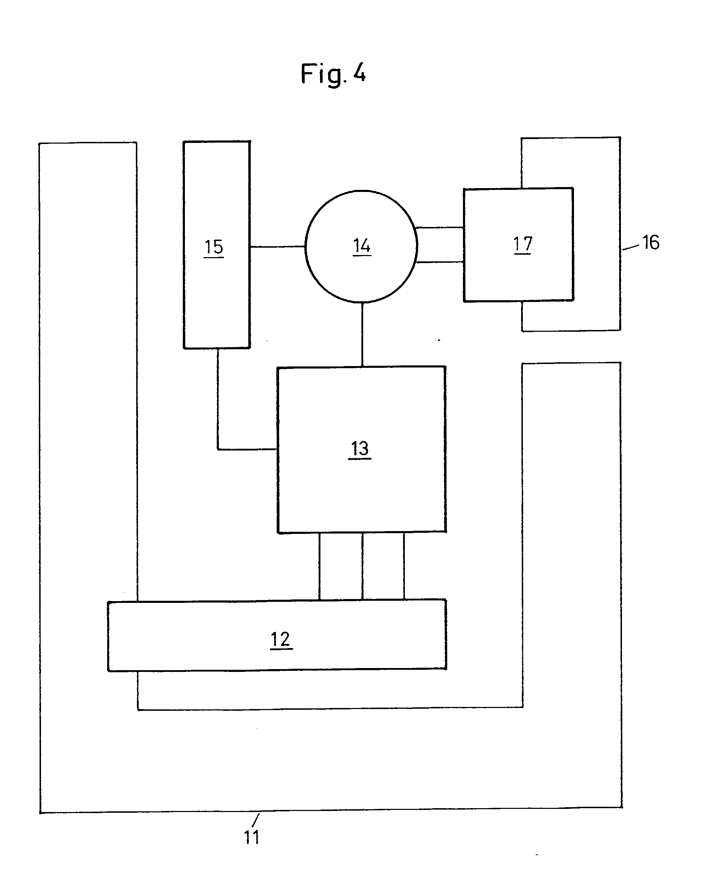

In weiterer Ausgestaltung der Erfindung weist die Vorrichtung eine als Antenne wirkende leitende Schleife 11 (Fig. 4) auf, die über eine Treiberstufe 12 an einen Mikrocomputer 13 angeschlossen ist, der durch eine Batterie oder Akkumulator 14 gespeist werden kann.

Die Vorrichtung kann auch einen Diskriminator 15 aufweisen, um die Batterie oder den Akkumulator 14 ein- oder auszuschalten.

Die Vorrichtung kann auch eine zweite als Antenne wirkende Schleife 16 aufweisen, die über eine Ladeschaltung 17 an den Akkumulator 14 angeschlossen ist.

Die Schaltung nach Figur 4 funktioniert folgendermassen:

Normalerweise ist der Akkumulator ausgeschaltet, das heisst, der Mikrocomputer 13 und die Treiberstufe 12 sind nicht an den Akkumulator angeschlossen. Zur Inbetriebsetzung wird beispielsweise die obere Kante der Vorrichtung, das heisst der Diskriminator 15, für eine kurze Zeit in Kontakt mit einem Weicheisen gebracht. Dadurch wird bewirkt, dass eine elektrische Verbindung zwischen dem Akkumulator 14 und den Bauteilen 13 und 12 hergestellt wird. Dies alles ist, um Akkumulator-Energie zu sparen. Nach Betätigung des Diskriminators 15 bleiben die Bauteile 13 und 12 eingeschaltet, und zwar entweder für eine vorbestimmte Zeit, beispielsweise 2 bis 5 Stunden, oder bis diese Kante der Vorrichtung nochmals für eine sehr kurze Zeit in Kontakt mit einem Weicheisen gebracht wird.

Durch das innere Gedächtnis des Diskriminators 15 wird die Batterie oder der Akkumulator 14 durch den Kontakt mit einem Weicheisen eingeschaltet, wenn er ausgeschaltet war, oder ausgeschaltet, wenn er eingeschaltet war. Der Diskriminator 15 kann beispielsweise ein Reed-Relais umfassen oder auch durch ein anderes physikalisches Prinzip betätigt werden. Es ist auch möglich, einen zweiten Diskriminator für das Ausschalten vorzusehen.

Wenn der Mikrocomputer 13 eingeschaltet ist, erzeugt er eine Sequenz von Impulsen, die über die Treiberstufe 12 an die Antenne 11 gelangen. Diese Impulse können eine konstante vorbestimmte Frequenz oder eine sich beispielsweise sägezahnförmig verändernde oder eine gewobbelte Frequenz aufweisen. Der Mikrocomputer 13 kann demnach auch wie ein Frequenzsynthesizer arbeiten.

Die Antenne 16 kann vorgesehen sein, um den Akkumulator 14 mit Hilfe eines Ladegeräts von aussen zu laden. Wenn beispielsweise die Waschmaschine elektromagnetische Felder ausstrahlt, die auf die Antenne 16 oder gegebenenfalls auf die Antenne 11 einwirken, können der Akkumulator 14 und/oder der Diskriminator 15 sowie das erwähnte Ladegerät entfallen.

Durch diese elektromagnetischen Impulse wird die Reinigungswirkung der Magnete noch mehr verbessert.

Vorzugsweise sind inwendig auf die Kunststoffplatte metallisch leitende Leiterbahnen als Antenne 11 bzw. Antennen 11, 16 aufgedruckt.

Die äussere Oberfläche der Vorrichtung kann mit einem Aufdruck versehen sein.

Gemäss einer bevorzugten Ausführung der erfindungsgemässen Vorrichtung besteht sie aus kochfesten, recyclingbaren Komponenten.

Das Gehäuse kann beispielsweise aus Luranyl® und vorzugsweise in Abmessungen von 6 bis 12 cm Länge x 4 bis 7 cm Breite und 3 bis 10 mm Dicke ausgebildet sein.

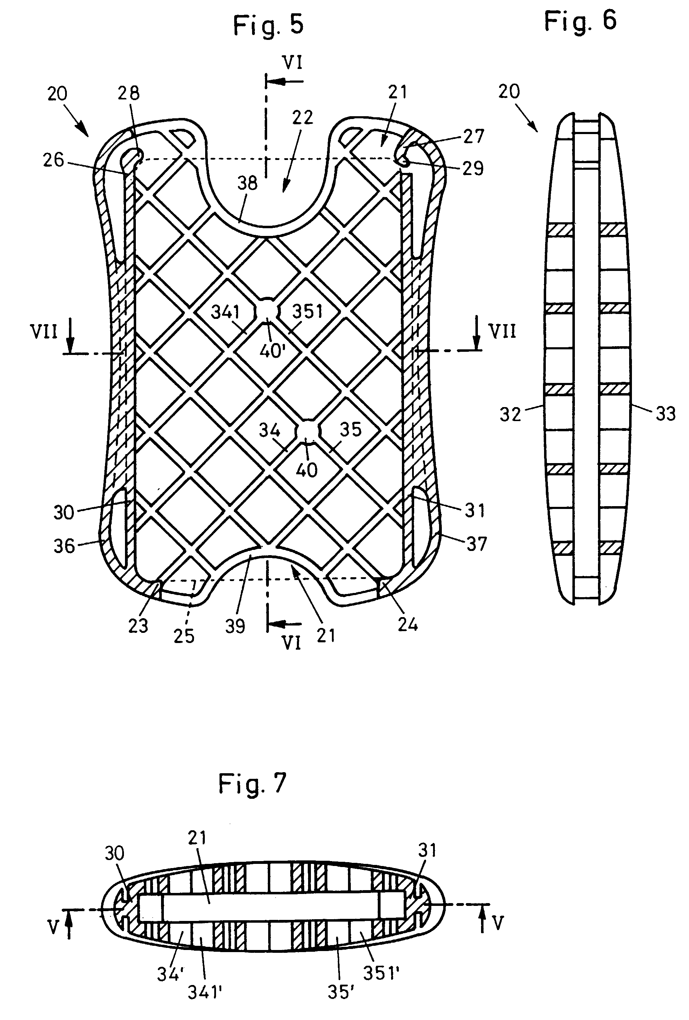

Die korbartige Schutzhülle 20 nach den Figuren 5 bis 7 hat einen Innenraum 21 (Fig. 5), in den eine Kunststoffplatte nach der Erfindung aufgenommen wird. Der Innenraum 21 hat eine Mündung oder Öffnung 22, durch die die Platte eingeführt wird. Im Bodenbereich der Schutzhülle 20 sind links und rechts Schultern 23, 24 zur Halterung der unteren Randseite der Platte vorhanden, deren Lage in Figur 5 punktiert angedeutet und mit dem Bezugszeichen 25 gekennzeichnet ist.

Im oberen Bereich der Schutzhülle sind links und rechts elastische Lippen oder Stege 26, 27 zur Halterung der oberen Randseite der Platte einstückig mit der Schutzhülle ausgebildet. Die elastischen Lippen 26, 27 sind schräg angeordnet und haben eine Erweiterung 28, 29, derart, dass die Platte durch eine sanfte Verformung der Lippen in den Innenraum 21 eingeführt werden kann, wenn sie aber dort bis zu den Schultern 23, 24 gelangt, die Lippen 26, 27 zur ursprünglichen Lage zurückkommen und die Platte eingeklemmt halten.

Die Schutzhülle 20 weist zwei längliche seitliche Wände 30, 31 auf, deren Breite grösser als die Höhe des für die Platte vorgesehenen Raums 25 ist. Die Breite der Wände 30, 31 kann zudem grösser in ihrem mittleren Bereich als an den Enden sein, wie durch die Wölbungen 32, 33 in Figur 6 angedeutet ist. Der obere Rand der Wand 30 ist durch mehrere Rippen 34, 341, ... und 35, 351, ... mit dem oberen Rand der Wand 31 verbunden. In gleicher Weise ist der untere Rand der Wand 30 durch mehrere Rippen 34', 341', ... und 35', 351' ... (Fig. 7) mit dem unteren Rand der Wand 31 verbunden. Die Schutzhülle 20 kann zwei zusätzliche längliche seitliche aussenseitig mit je einer der Wände 30, 31 verbundene Schutzwände 36, 37 aufweisen. Die Schutzwände 36, 37 können im oberen und im unteren Bereich durch je zwei dünne bogenförmige Rippen 38, 39 verbunden sein, mit denen auch die Rippen 34, 35, ... bzw. 34', 35', ... verbunden sind.

Die Platte ist somit vorzugsweise in der korbartigen Schutzhülle untergebracht, wodurch die eingebauten Magnete und/oder Mittel zur Erzeugung eines elektromagnetischen Feldes in einer grösseren Distanz zu der in der Waschmaschine oder Waschtrommel möglicherweise vorhandenen Eisenteile gehalten werden, die gegebenenfalls eine ungünstige Verminderung des Magnetfeldes verursachen würden. Die gewölbte Form der Schutzhülle verhindert zudem eine mögliche Beschädigung der Wäsche.

Das durch die Rippen 34, 34', ... 35, 35', ... wabenförmig ausgebildete Gitter ermöglicht, dass das Wasser in optimaler Weise bis zur Oberfläche der Platte gelangt.

Die korbartige Schutzhülle kann zudem mit einer Dauergeruchskomponente versehen werden, die die fehlende Parfümierung des eingesparten Waschpulvers ersetzt. Es ist ausserdem vorgesehen, eine Öffnung auf beiden Flachseiten der Schutzhülle anzubringen, in der gegebenenfalls Waschmittel oder andere Substanzen in Tablettenform eingesetzt werden können.

Zur Optimierung der Verschweissung können die Wände 30 und 36 bzw. 31 und 37 laufende Schweissnähte, bestehend aus Nut und Kamm, aufweisen.

Wenn das Gehäuse ohne korbartige Schutzhülle vorgesehen ist, kann es zwar flach sein, jedoch zwei nach aussen gewölbte breite Seiten aufweisen.

Die Schutzhülle kann vorgesehen sein, um zwei plattenförmige Gehäuse aufzunehmen, wobei dann in einem die Dauermagnete und im anderen die Mittel zur Erzeugung von elektromagnetischen Wellen untergebracht sind.

Die Vorrichtung kann nur mit Dauermagneten oder nur mit den Mitteln zur Erzeugung von elektromagnetischen Wellen oder mit beiden ausgebildet sein.

Die Stege 26, 27 können mit der Rippe 38 verbunden sein (Fig. 5, rechts). Gemäss einer anderen Variante der vorliegenden Erfindung können umgekehrt auch die Stege 26 und 27 durch einen Teil der Wand 30 bzw. 31 ausgebildet und durch einen Luftspalt von der Rippe 38 getrennt sein (Fig. 5, links). Die Rippen 34, 35, ... 34', 35' ... können viereckige Zellen (Fig. 5) oder polygonale Zellen bilden, wobei die Kreuzungen zwischen den Rippen 34, 35 knotenartige Verdickungen 40, 40' bilden können. Die wabenförmig ausgebildeten Seiten der Schutzhülle 20 sind somit durch sich kreuzende bodenlose Rippen 34, 35, ... 34', 35', ... gebildet. In beiden Varianten kann durch Spreizen der Stege 26, 27 die Platte aus der Schutzhülle entfernt werden, und zwar durch Drücken im Bereich der durch die Rippe 39 definierten Öffnung 21 und/oder durch Ziehen bei der Öffnung 22.

## Patentansprüche

1. Vorrichtung zum Reinigen von Gegenständen, dadurch gekennzeichnet, dass sie Mittel zur Erzeugung von Magnetfeldern umfasst, die in einem flachen wasserdichten Gehäuse (1) untergebracht sind, das im wesentlichen aus einem elektromagnetisch neutralen Material besteht.

2. Vorrichtung nach Anspruch 1, dadurch gekennzeichnet, dass das Gehäuse (1) aussenseitig eine Erweiterung aufweist.

3. Vorrichtung nach Anspruch 2, dadurch gekennzeichnet, dass die Erweiterung durch eine korbartige Schutzhülle (20) mit einem plattenförmigen Innenraum gebildet ist, und dass das flache Gehäuse (1) plattenförmig ausgestaltet und in diesem plattenförmigen Innenraum passend untergebracht ist.

4. Vorrichtung nach einem der Ansprüche 1 bis 3, dadurch gekennzeichnet, dass im Gehäuse (1) zwei in einem Abstand angeordnete Dauermagnetstangen (2, 3) untergebracht sind, die die Mittel zur Erzeugung von Magnetfeldern bilden.

5. Vorrichtung nach einem der Ansprüche 1 bis 4, dadurch gekennzeichnet, dass diese Mittel zur Erzeugung von Magnetfeldern Mittel zur Erzeugung von elektromagnetischen Wellen (12, 13, 14) und eine elektrisch leitende als Antenne wirkende geschlossene oder offene Schleife (11) umfassen.

6. Vorrichtung nach Anspruch 5, dadurch gekennzeichnet, dass diese Mittel elektromagnetische Impulse mit einer sich verändernden Frequenz ausstrahlen.

7. Vorrichtung nach Anspruch 5 oder 6, dadurch gekennzeichnet, dass die leitende Schleife (11) eine auf einer Printplatte oder direkt inwendig auf das Gehäuse aufgedruckte Leiterbahn ist, und dass das Gehäuse zwei verschweisste oder zusammengeklebte gleiche oder ungleiche Gehäuseteile umfasst.

8. Vorrichtung nach einem der Ansprüche 3 bis 7, dadurch gekennzeichnet, dass die Schutzhülle (20) eine Öffnung (22) zur Aufnahme des plattenförmigen Gehäuses aufweist, und dass im Bereich der Öffnung (22) elastische Stege (26, 27) vorhanden sind, die das Gehäuse im Innern der Schutzhülle (20) eingeklemmt halten.

9. Vorrichtung nach einem der Ansprüche 5 bis 8, dadurch gekennzeichnet, dass diese Mittel einen Mikrocomputer (13) und/oder einen Schwingquarz umfassen.

10. Vorrichtung nach einem der Ansprüche 5 bis 9, dadurch gekennzeichnet, dass, um eine in der Vorrichtung eingebaute Batterie ein- und auszuschalten, mindestens ein von aussen aktivierbarer Diskriminator (15) vorhanden ist.
